# EUROPÄISCHE PATENTSCHRIFT

(11) **EP 2 048 476 B1**
(45) Veröffentlichungstag und Bekanntmachung des Hinweises auf die Patenterteilung: **11.12.2013**
(21) Anmeldenummer: 07019636.5
(22) Anmeldetag: 08.10.2007
(51) Int. Cl.: G01C 21/26, B60R 16/023, B60W 30/02, B60W 40/06

(54) **Fahrerunterstützungsverfahren**
Driver assistance method
Procédé d'assistance au conducteur

(43) Veröffentlichungstag der Anmeldung: 15.04.2009
(73) Patentinhaber: Delphi Technologies, Inc., Troy, MI 48007 (US)
(72) Erfinder: Müller-Schneiders, Stefan, 40597 Düsseldorf (DE); Ghosh, Sharmila, 55128 Mainz (DE)
(74) Vertreter: Robert, Vincent

(56) Entgegenhaltungen:
- EP-A- 0 819 912
- EP-A- 1 104 881
- DE-A1- 10 341 754
- US-B1- 6 577 937
- JANSSEN H ET AL: "Vehicle surround sensing based on information fusion of monocular video and digital map" 14. Juni 2004 (2004-06-14), INTELLIGENT VEHICLES SYMPOSIUM, 2004 IEEE PARMA, ITALY JUNE 14-17, 2004, PISCATAWAY, NJ, USA,IEEE, PAGE(S) 244-249 , XP010727476 ISBN: 0-7803-8310-9 * Zusammenfassung; Abbildungen 1,4 * * Seite 248, linke Spalte, letzter Absatz - rechte Spalte, Absatz 1 *

## Beschreibung

Die Erfindung betrifft ein Verfahren zur Unterstützung eines Fahrers eines Fahrzeugs während einer Fahrt entlang einer Fahrbahn, bei dem Kurvendaten, die den Verlauf einer sich in Fahrtrichtung gesehen vor dem Fahrzeug erstreckenden Fahrbahnkurve angeben, ermittelt werden und anhand der Kurvendaten eine Maximalgeschwindigkeit ermittelt wird, die ein sicheres Durchfahren der Kurve erlaubt.

Ein derartiges Verfahren ist grundsätzlich bekannt und kommt beispielsweise in einem Fahrerassistenzsystem zum Einsatz, um dem Fahrer des Fahrzeugs eine sich aus dem Kurvenverlauf ergebende Höchstgeschwindigkeit anzuzeigen, mit welcher das Fahrzeug die Kurve sicher durchfahren kann, und/oder um den Fahrer zu warnen, wenn sich das Fahrzeug der Kurve mit einer Geschwindigkeit nähert bzw. mit einer Geschwindigkeit in die Kurve einfährt, bei welcher ein sicheres Durchfahren der Kurve nicht mehr gewährleistet ist.

Aus der EP-A-1 104 881 ist ein Fahrerassistenzsystem bekannt, das sowohl Kurvendaten als auch Fahrbahnzustandsdaten ermittelt, um einem Fahrzeug ein sicheres Durchfahren einer Kurve zu ermöglichen. Ähnliche Systeme sind in der US-B1-6 577 937, der EP-A-0 819 912, der DE-A1-103 41 754 sowie in Janssen H et al: "Vehicle surround sensing based on information fusion of monocular video and digital map" (Intelligent Vehicles Symposium, 2004 IEEE Parma, Italy, 14. -17. Juni 2004) beschrieben. Der Erfindung liegt die Aufgabe zugrunde, ein Fahrerunterstützungsverfahren zu schaffen, durch welches die Fahrsicherheit noch weiter erhöht wird.

Zur Lösung der Aufgabe ist ein Verfahren mit den Merkmalen des An-spruchs 1 sowie ein Fahrerassistenzsystem gemäß Auspruch 13 vorgesehen.

Bei dem erfindungsgemäßen Verfahren zur Unterstützung eines Fahrers eines Fahrzeugs während einer Fahrt entlang einer Fahrbahn werden nicht nur Kurvendaten, die den Verlauf einer sich in Fahrtrichtung gesehen vor dem Fahrzeug erstreckenden Fahrbahnkurve angeben, sondern auch Fahrbahnzustandsdaten ermittelt, die den Zustand der in Fahrtrichtung gesehen vor dem Fahrzeug liegenden Fahrbahnoberfläche angeben.

Erfindungsgemäß werden die in einem in Fahrtrichtung gesehen vor dem Fahrzeug liegenden Umgebungsbereich des Fahrzeugs herrschenden Sichtverhältnisse durch die Auswertung mindestens eines Bildes abgeschätzt, das mit Hilfe einer Kamera aufgenommen wird, welche den Umgebungsbereich erfasst. Durch eine Fusion der Kurvendaten und der Fahrbahnzustandsdaten wird unter Berücksichtigung der abgeschätzten Sichtverhältnisse eine empfohlene Maximalgeschwindigkeit ermittelt, die ein sicheres Durchfahren der Kurve erlaubt.

Bei der Kamera kann es sich um eine multifunktional genutzte Kamera handeln, die zusätzlich zur Ermittlung der Sichtverhältnisse beispielsweise zur Steuerung eines Scheibenwischers; zur Spurerkennung, zur Verkehrszeichenerfassung und/oder zur Ermittlung des Fahrbahnzustands genutzt wird, wodurch ein erheblicher Kostenvorteil erzielt wird.

Der Erfindung liegt mit anderen Worten der allgemeine Gedanke zugrunde, die für ein sicheres Durchfahren einer Kurve empfohlene Maximalgeschwindigkeit nicht ausschließlich anhand des Kurvenverlaufs zu ermitteln, sondern hierbei zusätzlich den Zustand der sich in Fahrtrichtung gesehen vor dem Fahrzeug erstreckenden Fahrbahnoberfläche sowie die Sichtverhältnisse zu berücksichtigen. Hierdurch ist es möglich, die sich rein aus dem Kurvenverlauf ergebende Maximalgeschwindigkeit bei Detektion eines suboptimalen Fahrbahnoberflächenzustands, der zu einer schlechteren Haftung der Fahrzeugräder an der Fahrbahnoberfläche führen kann, und/oder bei besonders widrigen Sichtverhältnissen sowie bei Nacht die Maximalgeschwindigkeit nach unten anzupassen, um dem Fahrer des Fahrzeugs eine empfohlene Maximalgeschwindigkeit anzuzeigen, die auch unter widrigen Fahrbahnbedingungen noch ein sicheres Durchfahren der Kurve erlaubt.

Im Ergebnis sieht die Erfindung also die Ermittlung einer für eine Kurvenfahrt empfohlene Maximalgeschwindigkeit vor, welche mindestens zwei zusätzlichen relevanten Umgebungsparametern, nämlich dem Zustand der Fahrbahnoberfläche und der Sichtverhältnisse, Rechnung trägt und somit besser auf die die Kurvenfahrt beeinflussenden tatsächlichen Gegebenheiten abgestimmt ist. Die erfindungsgemäße Ermittlung der für die Kurvenfahrt empfohlenen Maximalgeschwindigkeit trägt also dazu bei, dass die Kurve mit einem geringeren Unfallrisiko durchfahren werden kann, und sorgt somit insgesamt für eine höhere Fahrsicherheit.

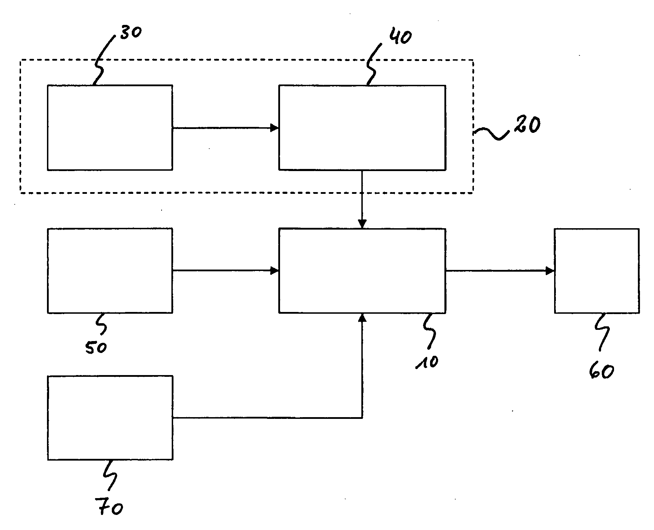

Vorteilhafte Ausbildungen der Erfindung sind den Unteransprüchen, der Beschreibung und der Zeichnung zu entnehmen.

Gemäß einer bevorzugten Ausführungsform umfassen die Fahrbahnzustandsdaten eine Information über das Vorliegen von Nässe auf der Fahr-Gemäß einer bevorzugten Ausführungsform umfassen die Fahrbahnzustandsdaten eine Information über das Vorliegen von Nässe auf der Fahrbahn. Die Haftung eines Fahrzeugs auf einer nassen Fahrbahn ist gegenüber der Haftung auf einer trockenen Fahrbahn typischerweise deutlich reduziert. Indem der Trockenheits- bzw. Feuchtigkeitsgrad der Fahrbahnoberfläche bei der Ermittlung der empfohlenen Maximalgeschwindigkeit mit einbezogen wird, wird die ermittelte empfohlene Maximalgeschwindigkeit für eine nasse Fahrbahn typischerweise geringer ausfallen als für eine trockene Fahrbahn. Auf diese Weise trägt das Verfahren nicht nur auf trockener Straße, sondern auch auf nasser Straße zu einer sichereren Kurvenfahrt bei.

Alternativ oder zusätzlich können die Fahrbahnzustandsdaten auch Informationen über die Beschaffenheit der Fahrbahnoberfläche umfassen, beispielsweise Informationen über die Rauhigkeit und/oder Art der Fahrbahnoberfläche oder Informationen über das Vorliegen von Eis, Schnee, Sand oder Öl auf der Fahrbahn.

Vorteilhafterweise werden die Fahrbahnzustandsdaten durch die Auswertung mindestens eines Bildes ermittelt, das mit Hilfe einer Kamera aufgenommen wird, welche einen in Fahrtrichtung gesehen vor dem Fahrzeug liegenden Umgebungsbereich des Fahrzeugs erfasst.

Die Kamera kann Bestandteil eines zur Steuerung eines Scheibenwischers vorgesehenen Regensensors sein, und/oder es kann sich um eine zur Spurerkennung, zur Verkehrszeichenerkennung und/oder zur Ermittlung der Sichtverhältnisse genutzte Kamera eines Fahrerassistenzsystems handeln. Eine multifunktionale Nutzung der Kamera, d.h. also eine Nutzung der Kamera nicht nur zur Ermittlung des Fahrbahnzustands sondern auch zur Steuerung eines Scheibenwischers, zur Spurerkennung, zur Verkehrszeichenerkennung und/oder zur Ermittlung der Sichtverhältnisse, schafft den bereits erwähnten Kostenvorteil.

Durch eine geeignete Auswertung der Bilder, die mit Hilfe der Kamera aufgenommen werden, kann nicht nur das Vorliegen von Nässe ermittelt werden, sondern es kann beispielsweise auch die Textur der Fahrbahnoberfläche analysiert und anhand dessen auf das Vorliegen von Sand auf der Fahrbahn bzw. auf eine Staub- oder Schotterstraße geschlossen werden, und dieses bei der Ermittlung der empfohlenen Maximalgeschwindigkeit berücksichtigt werden.

Alternativ oder zusätzlich kann zumindest das Vorliegen von Nässe auf der Fahrbahn auch durch eine andere Art von Regensensor ermittelt werden. Bevorzugt kommt auch hierfür ein Regensensor in Betracht, der ohnehin im Fahrzeug vorhanden ist, wie beispielsweise ein Regensensor, welcher die Betätigung eines Scheibenwischers steuert. Auf diese Weise wird der Regensensor multifunktional genutzt, nämlich zum einen zur Steuerung des Scheibenwischers und zum anderen zur Ermittlung der für die Kurvenfahrt empfohlenen Maximalgeschwindigkeit, wodurch zusätzlich zur Erhöhung der Fahrsicherheit auch hier ein gewisser Kostenvorteil erreicht wird.

Ferner können die Fahrbahnzustandsdaten alternativ oder zusätzlich durch einen internetbasierten Dienst, einen Radiodienst, wie z.B. TMC (für "Traffic Message Channel"), einen Kommunikationsdienst zwischen dem Fahrzeug und einem anderen Fahrzeug und/oder einen Kommunikationsdienst zwischen dem Fahrzeug und einer Infrastruktur, die beispielsweise entlang der Fahrbahn installierte Sendeeinrichtungen umfasst, empfangen werden.

Die durch die voranstehend genannten Dienste empfangenen Fahrbahnzustandsdaten können anstelle der Fahrbahnzustandsdaten, die durch eine fahrzeugeigene Kamera ermittelt werden, oder in Ergänzung zu diesen bei der Ermittlung der empfohlenen Maximalgeschwindigkeit berücksichtigt werden. Eine Fusion der Fahrbahnzustandsdaten, die durch eine fahrzeugeigene Kamera ermittelt werden, und der Fahrbahnzustandsdaten, die von außen empfangen werden, ermöglicht eine Ermittlung des tatsächlichen Fahrbahnzustands mit einer erhöhten Zuverlässigkeit.

Gemäß einer weiteren Ausführungsform werden die Kurvendaten aus einer dem Fahrzeug zur Verfügung gestellten digitalen Landkarte ermittelt. Bevorzugt handelt es sich bei einer solchen digitalen Landkarte um die Landkarte eines in dem Fahrzeug installierten Navigationssystems. Je nach Qualität und insbesondere Auflösung der Landkarte kann es bei der Ermittlung der empfohlenen Maximalgeschwindigkeit ausreichend sein, den Verlauf der zu durchfahrenden Kurve ausschließlich anhand der Landkarte zu ermitteln.

Alternativ oder zusätzlich können die Kurvendaten durch die Auswertung mindestens eines Bildes ermittelt werden, das mit Hilfe einer Kamera aufgenommen wird, welche einen in Fahrtrichtung gesehen vor dem Fahrzeug liegenden Umgebungsbereich des Fahrzeugs erfasst.

Bei der Kamera kann es sich um die Kamera eines Spurerkennungsmoduls eines Fahrassistenzsystems handeln, welche nicht nur zur Erfassung des Verlaufs einer Fahrzeugspur sondern multifunktional genutzt werden kann, d.h. zusätzlich auch noch zur Steuerung eines Scheibenwischers, zur Ermittlung von Fahrbahnzustandsdaten, zur Erfassung von Verkehrskennzeichen und/oder zur Ermittlung der Sichtverhältnisse.

Durch eine Fusion von Kurvendaten, die aus einer digitalen Landkarte ermittelt werden, und Kurvendaten, die aus den Kamerabildern gewonnen werden, ist der Verlauf der zu durchfahrenden Kurve mit einer erhöhten Genauigkeit ermittelbar, was letztlich zu einer noch höheren Fahrsicherheit beiträgt.

Gemäß einer weiteren Ausführungsform wird ein Verkehrszeichen durch die Auswertung mindestens eines Bildes detektiert, das mit Hilfe einer Kamera aufgenommen wird, welche ein in Fahrtrichtung gesehen vor dem Fahrzeug liegenden Umgebungsbereich des Fahrzeugs erfasst, und das detektierte Verkehrszeichen wird bei der Ermittlung der empfohlenen Maximalgeschwindigkeit berücksichtigt.

Auch bei der zur Verkehrszeichenerkennung verwendeten Kamera kann es sich um eine multifunktional genutzte Kamera handeln, d.h. um eine Kamera, die zusätzlich zur Verkehrszeichenerkennung zur Steuerung eines Scheibenwischers, zur Spurerkennung, zur Ermittlung des Fahrbahnzustands und/oder zur Ermittlung der Sichtverhältnisse genutzt wird, wodurch der bereits erwähnte Kostenvorteil erreicht wird.

Durch eine entsprechende Auswertung detektierter Verkehrszeichen können für einen Streckenabschnitt der Fahrbahn und insbesondere für die zu durchfahrende Kurve geltende Geschwindigkeitsbeschränkungen erfasst und bei der Ermittlung der empfohlenen Maximalgeschwindigkeit berücksichtigt werden. Gilt für einen kurvigen Straßenabschnitt beispielsweise eine Geschwindigkeitsbeschränkung von "80 km/h" oder von "80 km/h bei Nässe", so kann die empfohlene Maximalgeschwindigkeit entsprechend auf 80 km/h gesetzt werden, auch wenn der Straßen- bzw. Kurvenverlauf und der Fahrbahnzustand theoretisch eine höhere Maximalgeschwindigkeit zuließen.

Alternativ oder zusätzlich zur Abschätzung der Sichtverhältnisse durch die Auswertung von Kamerabildern können die in Fahrtrichtung gesehen vor dem Fahrzeug herrschenden Sichtverhältnisse auch anhand einer automatischen Betätigung eines Scheinwerfers des Fahrzeugs abgeschätzt werden. Ein automatisches Einschalten des Scheinwerfers kann beispielsweise als ein Hinweis auf widrige Sichtverhältnisse gewertet werden, was eine Reduzierung der empfohlenen Maximalgeschwindigkeit zur Folge haben kann.

Liegt die Ist-Geschwindigkeit des Fahrzeugs bei Annäherung an oder beim Einfahren in die Kurve über der empfohlenen Maximalgeschwindigkeit, so kann ein, beispielsweise optisches und/oder akustisches, Warnsignal an den Fahrer ausgegeben werden. Alternativ oder zusätzlich kann das Fahrzeug automatisch verlangsamt werden, wenn die Ist-Geschwindigkeit des Fahrzeugs bei Annäherung an oder beim Einfahren in die Kurve über der empfohlenen Maximalgeschwindigkeit liegt.

Weiterer Gegenstand der Erfindung ist ferner ein Fahrerassistenzsystem zur Unterstützung eines Fahrers eines Fahrzeugs während einer Fahrt entlang einer Fahrbahn, mit einem ersten Modul zur Ermittlung von Kurvendaten, die den Verlauf einer sich in Fahrtrichtung gesehen vor dem Fahrzeug erstreckenden Fahrbahnkurve angeben, einem zweiten Modul zur Ermittlung von Fahrbahnzustandsdaten, die den Zustand der in Fahrtrichtung gesehen vor dem Fahrzeug liegenden Fahrbahnoberfläche angeben, und einem mit dem ersten und zweiten Modul verbundenen Prozessormodul zur Ermittlung einer ein sicheres Durchfahren der Kurve erlaubenden empfohlenen Maximalgeschwindigkeit anhand der durch das erste und zweite Modul ermittelten Kurven- und Fahrbahnzustandsdaten.

Das erfindungsgemäße Fahrerassistenzsystem ermöglicht die Durchführung des erfindungsgemäßen Verfahrens mit allen seinen voranstehend beschriebenen Vorteilen. Das Fahrerassistenzsystem kann zusätzlich zu den Modulen zur Ermittlung von Kurvendaten und Fahrbahnzustandsdaten ein Regensensormodul, ein Spurerkennungsmodul, ein Verkehrszeichenerfassungsmodul, ein Sichtverhältnis-Ermittlungsmodul und/oder ein Modul zur automatischen Betätigung eines Fahrzeugscheinwerfers umfassen bzw. mit einem Navigationssystem des Fahrzeugs gekoppelt sein.

Bevorzugt nutzen die voranstehenden Module, sofern vorhanden, eine gemeinsame Kamera, welche einen in Fahrtrichtung gesehen vor dem Fahrzeug liegenden Umgebungsbereich des Fahrzeugs erfasst, wodurch eine besonders Platz sparende und kostengünstige Bauweise der Module erreicht wird. Grundsätzlich ist es aber auch möglich, zumindest eines oder alle dieser Module autonom auszubilden, d.h. also mit jeweils einer eigenen Kamera oder einem anderen geeigneten Detektionsmittel auszustatten.

Nachfolgend wird die Erfindung rein beispielhaft anhand einer vorteilhaften Ausführungsform unter Bezugnahme auf die beigefügte Zeichnung beschrieben.

Die einzige Figur zeigt eine schematische Darstellung eines erfindungsgemäßen Fahrerassistenzsystems eines Fahrzeugs.

Kernstück des in der Figur gezeigten Fahrerassistenzsystems ist ein Prozessormodul 10. Das Prozessormodul 10 ist mit einem Ermittlungsmodul 20 verbunden, welches eine Kamera 30, beispielsweise eine digitale Videokamera, und eine mit der Kamera 30 verbundene Auswerteeinheit 40 zur Auswertung der durch die Kamera 30 aufgenommenen Bilder umfasst.

Die Kamera 30 ist so ausgebildet und an dem Fahrzeug angebracht, dass sie einen in Fahrtrichtung gesehen vor dem Fahrzeug liegenden Umgebungsbereich des Fahrzeugs einschließlich einer sich vor dem Fahrzeug erstreckenden Fahrbahn erfasst. Beispielsweise kann die Kamera 30 im Bereich eines im Bereich der Fahrzeugwindschutzscheibe vorgesehenen Rückspiegels installiert sein.

Ein in der Auswerteeinheit 40 implementierter Bildauswertealgorithmus ist so ausgebildet, dass sich durch die Auswertung der von der Kamera 30 aufgenommenen Bilder zum einen Feuchtigkeit, die sich z.B. in Form von Nebel, Regen oder Schnee auf der Windschutzscheibe niederschlägt, detektieren und zum anderen der Verlauf der sich in Fahrtrichtung gesehen vor dem Fahrzeug erstreckenden Fahrbahn erfassen lässt. Während erstere Funktionalität auch als Regensensorfunktion bezeichnet wird, ist letztere Funktionalität als Fahrspurerkennung bekannt.

Zusätzlich weist die Auswerteeinheit 40 eine Verkehrszeichenerkennungsfunktionalität auf, d.h. die Auswerteeinheit 40 kann in den Kamerabildern Verkehrszeichen detektieren und deren Aussage bzw. Inhalt erfassen.

Außerdem umfasst die Auswerteeinheit 40 einen Bildauswertealgorithmus, der es ermöglicht, aus den aufgenommenen Kamerabildern eine Information über die in dem von der Kamera 30 erfassten Umgebungsbereich herrschenden Sichtverhältnisse abzuleiten und beispielsweise zu ermitteln ob es Tag oder Nacht ist oder ob es neblig ist.

Darüber hinaus sieht die Auswerteeinheit 40 einen Bildauswertealgorithmus vor, der die Textur der Oberfläche der vor dem Fahrzeug liegenden Fahrbahn analysiert, um zu detektieren, ob es sich bei der Fahrbahn beispielsweise um eine asphaltierte Straße oder um eine Staub- oder Schotterstraße handelt oder ob z.B. eine asphaltierte Straße bereichsweise mit einer Sand-, Schnee- oder Eisschicht überzogen ist.

Das Prozessormodul 10 ist ferner mit einem Fahrzeugnavigationssystem 50 gekoppelt, in welchem eine digitale Landkarte gespeichert ist. Mit Hilfe des globalen Positionierungssystems GPS kann das Navigationssystem jederzeit die aktuelle Position des Fahrzeugs auf der digitalen Landkarte bestimmen.

Während der Fahrt liefert das Navigationssystem 50 an das Prozessormodul 10 Informationen über den Verlauf der Fahrbahn, auf der sich das Fahrzeug bewegt und insbesondere Informationen über den Verlauf einer sich in Fahrtrichtung gesehen vor dem Fahrzeug erstreckenden und zu durchfahrenden Kurve.

Gleichzeitig erhält das Prozessormodul 10 von der Auswerteeinheit 40 des Ermittlungsmoduls 20 die mit Hilfe des Fahrspurerkennungs-Algorithmus aus den Bildern der Kamera 30 ermittelten Daten über den Verlauf der sich in Fahrtrichtung gesehen vor dem Fahrzeug erstreckenden Fahrbahn.

Die von dem Navigationssystem 50 und von dem Ermittlungsmodul 20 gelieferten Fahrbahnverlaufsdaten werden in dem Prozessormodul 10 miteinander fusioniert, was in einer verbesserten Abschätzung eines Kurvenverlaufs und der Entfernung des Fahrzeugs zu der Kurve resultiert.

Für den so abgeschätzten Kurvenverlauf, insbesondere den diesem Kurvenverlauf zugrunde liegenden Kurvenradius, berechnet das Prozessormodul 10 unter Berücksichtigung der Fahrzeugeigenschaften, wie beispielsweise der Masse und Reibung der Fahrzeugräder, und unter Anwendung der einschlägigen physikalischen Grundgesetze, d.h. also der Fahrzeugdynamik, eine Maximalgeschwindigkeit, mit welcher das Fahrzeug die Kurve unter idealen Bedingungen sicher, d.h. also ohne aus der Kurve getragen zu werden oder ins Schleudern zu geraten, durchfahren kann.

Aus der für die idealen Bedingungen berechneten Maximalgeschwindigkeit wird unter Berücksichtigung der übrigen voranstehend genannten durch das Ermittlungsmodul 20 ermittelten und an das Prozessormodul 10 gelieferten Daten in dem Prozessormodul 10 eine empfohlene Maximalgeschwindigkeit ermittelt, die nicht nur dem abgeschätzten Kurvenverlauf, sondern auch den detektierten Straßen-, Witterungs- und Sichtverhältnissen Rechnung trägt.

So kann beispielsweise die Feststellung, dass es Nacht oder neblig ist oder dass die Fahrbahn nass oder sandig ist, dazu führen, dass die für die Idealbedingungen errechnete Maximalgeschwindigkeit um einen gewissen Betrag nach unten korrigiert wird.

Ferner kann die empfohlene Maximalgeschwindigkeit bei Detektion einer für einen kurvigen Straßenverlauf geltenden Geschwindigkeitsbegrenzung, wie sie durch den Verkehrszeichenerkennungs-Algorithmus ermittelt werden kann, auf den vorgegebenen Geschwindigkeitsgrenzwert herabgesetzt werden.

Die auf die voranstehend beschriebene Weise in dem Prozessormodul 10 ermittelte empfohlene Maximalgeschwindigkeit wird dem Fahrer des Fahrzeugs mittels eines geeigneten optischen und/oder akustischen Ausgabegeräts 60 angezeigt.

Wie der Figur zu entnehmen ist, ist das Prozessormodul 10 ferner mit einer Fahrzeugsteuerung 70 gekoppelt, durch welche das Prozessormodul 10 Daten betreffend der aktuellen Gierrate und Fahrzeuggeschwindigkeit erhält, die mit Hilfe an sich bekannter Sensoren ermittelt werden können.

Durch einen Vergleich der ermittelten empfohlenen Maximalgeschwindigkeit mit den von der Fahrzeugsteuerung 70 empfangenen Gierraten- und Fahrzeuggeschwindigkeitsdaten ermittelt das Prozessormodul 10, ob sich das Fahrzeug mit einer Geschwindigkeit der Kurve nähert bzw. in diese einfährt, die über der empfohlenen Maximalgeschwindigkeit liegt. Ist dies der Fall, so gibt das Prozessormodul 10 ein entsprechendes Warnsignal über das Ausgabegerät 60 an den Fahrer des Fahrzeugs aus, um diesen zu veranlassen, zur Vermeidung eines Unfalls die Geschwindigkeit des Fahrzeugs zu verringern.

Alternativ oder zusätzlich ist es auch denkbar, dass das Prozessormodul 10 zur Vermeidung eines Unfalls in die Fahrzeugsteuerung eingreift und eine automatische Verlangsamung des Fahrzeugs auf die empfohlene Maximalgeschwindigkeit veranlasst.

In dem vorliegenden Ausführungsbeispiel sind das Prozessormodul 10, die Auswerteeinheit 40 des Ermittlungsmoduls 20 und die Fahrzeugsteuerung 70 als getrennte Einheiten dargestellt. Grundsätzlich ist es jedoch auch möglich, die Auswerteeinheit 40 in das Prozessormodul 10 zu integrieren bzw. die Auswerteeinheit 40 und das Prozessormodul 10 in die Fahrzeugsteuerung 70 zu integrieren.

Darüber hinaus kann das Prozessormodul 10 mit einem nicht dargestellten Empfänger gekoppelt sein, welcher Signale, die Informationen über die Straßen-, Witterungs- und/oder Sichtverhältnisse umfassen, von außerhalb des Fahrzeugs empfängt, beispielsweise von entgegenkommenden Fahrzeugen, von einer am Straßenrand installierten Infrastruktur, über Radio oder über einen Internetdienst, um diese Daten zusätzlich zu den oder anstelle der durch das Ermittlungsmodul 20 gelieferten Daten zur Ermittlung der empfohlenen Maximalgeschwindigkeit heranzuziehen.

### Bezugszeichenliste

- 10: Prozessormodul
- 20: Ermittlungsmodul
- 30: Kamera
- 40: Auswerteeinheit
- 50: Navigationssystem
- 60: Ausgabegerät
- 70: Fahrzeugsteuerung

## Patentansprüche

1. Verfahren zur Unterstützung eines Fahrers eines Fahrzeugs während einer Fahrt entlang einer Fahrbahn, bei welchem Verfahren Kurvendaten, die den Verlauf einer sich in Fahrtrichtung gesehen vor dem Fahrzeug erstreckenden Fahrbahnkurve angeben, und Fahrbahnzustandsdaten, die den Zustand der in Fahrtrichtung gesehen vor dem Fahrzeug liegenden Fahrbahnoberfläche angeben, ermittelt werden und anhand der Kurvendaten und der Fahrbahnzustandsdaten eine empfohlene Maximalgeschwindigkeit ermittelt wird, die ein sicheres Durchfahren der Kurve erlaubt,
**dadurch gekennzeichnet, dass**
durch die Auswertung mindestens eines Bildes, das mit Hilfe einer Kamera (30) aufgenommen wird, welche einen in Fahrtrichtung gesehen vor dem Fahrzeug liegenden Umgebungsbereich des Fahrzeugs erfasst, die in dem Umgebungsbereich herrschenden Sichtverhältnisse abgeschätzt werden und die abgeschätzten Sichtverhältnisse bei der Ermittlung der empfohlenen Maximalgeschwindigkeit berücksichtigt werden.

2. Verfahren nach Anspruch 1,
**dadurch gekennzeichnet, dass**
die Fahrbahnzustandsdaten eine Information über die Beschaffenheit der Fahrbahnoberfläche umfassen.

3. Verfahren nach Anspruch 1 oder 2,
**dadurch gekennzeichnet, dass**
die Fahrbahnzustandsdaten eine Information über das Vorliegen von Nässe auf der Fahrbahn umfassen.

4. Verfahren nach zumindest einem der vorherigen Ansprüche,
**dadurchgekennzeichnet, dass**
die Fahrbahnzustandsdaten durch die Auswertung mindestens eines Bildes ermittelt werden, das mit Hilfe einer Kamera (30) aufgenommen wird, welche einen in Fahrtrichtung gesehen vor dem Fahrzeug liegenden Umgebungsbereich des Fahrzeugs erfasst.

5. Verfahren nach zumindest einem der vorherigen Ansprüche,
**dadurch gekennzeichnet, dass**
die Fahrbahnzustandsdaten durch einen Internet basierten Dienst, einen Radiodienst, einen Kommunikationsdienst zwischen dem Fahrzeug und einem anderen Fahrzeug und/oder einen Kommunikationsdienst zwischen dem Fahrzeug und einer Infrastruktur empfangen werden.

6. Verfahren nach zumindest einem der vorherigen Ansprüche,
**dadurch gekennzeichnet, dass**
die Kurvendaten aus einer dem Fahrzeug zur Verfügung gestellten digitalen Landkarte ermittelt werden.

7. Verfahren nach zumindest einem der vorherigen Ansprüche,
**dadurch gekennzeichnet, dass**
die Kurvendaten durch die Auswertung mindestens eines Bildes ermittelt wird, das mit Hilfe einer Kamera (30) aufgenommen wird, welche einen in Fahrtrichtung gesehen vor dem Fahrzeug liegenden Umgebungsbereich des Fahrzeugs erfasst.

8. Verfahren nach zumindest einem der vorherigen Ansprüche,
**dadurch gekennzeichnet, dass**
die empfohlene Maximalgeschwindigkeit unter Berücksichtigung eines Verkehrszeichens, das entlang der Fahrbahn angeordnet ist, und/oder unter Berücksichtigung der Sichtverhältnisse ermittelt wird, die in einem in Fahrtrichtung gesehen vor dem Fahrzeug liegenden Umgebungsbereich herrschen.

9. Verfahren nach zumindest einem der vorherigen Ansprüche,
**dadurch gekennzeichnet, dass**
durch die Auswertung mindestens eines Bildes, das mit Hilfe einer Kamera (30) aufgenommen wird, welche einen in Fahrtrichtung gesehen vor dem Fahrzeug liegenden Umgebungsbereich des Fahrzeugs erfasst, ein Verkehrszeichen erfasst wird und das erfasste Verkehrszeichen bei der Ermittlung der empfohlenen Maximalgeschwindigkeit berücksichtigt wird.

10. Verfahren nach zumindest einem der vorherigen Ansprüche,
**dadurch gekennzeichnet, dass**
anhand einer automatischen Betätigung eines Scheinwerfers des Fahrzeugs die in einem in Fahrtrichtung gesehen vor dem Fahrzeug liegenden Umgebungsbereich des Fahrzeugs herrschenden Sichtverhältnisse abgeschätzt werden und die abgeschätzten Sichtverhältnisse bei der Ermittlung der empfohlenen Maximalgeschwindigkeit berücksichtigt werden.

11. Verfahren nach zumindest einem der vorherigen Ansprüche,
**dadurchgekennzeichnet, dass**
ein Warnsignal an den Fahrer ausgegeben wird, wenn die Ist-Geschwindigkeit des Fahrzeugs beim Einfahren in die Kurve über der empfohlenen Maximalgeschwindigkeit liegt.

12. Verfahren nach zumindest einem der vorherigen Ansprüche,
**dadurch gekennzeichnet, dass**
das Fahrzeug automatisch verlangsamt wird, wenn die Ist-Geschwindigkeit des Fahrzeugs beim Einfahren in die Kurve über der empfohlenen Maximalgeschwindigkeit liegt.

13. Fahrerassistenzsystem zur Unterstützung eines Fahrers eines Fahrzeugs während einer Fahrt entlang einer Fahrbahn, mit einem Modul (20) oder mehreren Modulen zur Ermittlung von Kurvendaten, die den Verlauf einer sich in Fahrtrichtung gesehen vor dem Fahrzeug erstreckenden Fahrbahnkurve angeben, zur Ermittlung von Fahrbahnzustandsdaten, die den Zustand der in Fahrtrichtung gesehen vor dem Fahrzeug liegenden Fahrbahnoberfläche angeben, und zur Abschätzung der in einem in Fahrtrichtung vor dem Fahrzeug liegenden Umgebungsbereich des Fahrzeugs herrschenden Sichtverhältnisse durch die Auswertung mindestens eines von einer Kamera (30) aufgenommenen Bildes mittels einer Auswerteeinheit (40), und einem mit dem Modul (20) oder den Modulen verbundenen Prozessormodul (10) zur Ermittlung einer ein sicheres Durchfahren der Kurve erlaubenden empfohlenen Maximalgeschwindigkeit anhand der ermittelten Kurven- und Fahrbahnzustandsdaten sowie der abgeschätzten Sichtverhältnisse.

## Claims

1. A method for assisting a driver of a vehicle during a drive along a roadway, wherein the method determines bend data, indicating a course of a bend in the road ahead of the vehicle in direction of travel, and road condition data, indicating a condition of the road surface in front of the vehicle in the direction of travel, and determines a recommended maximum speed based on the bend data and the road condition data, enabling a safe passage of the bend,
**characterized in that** by evaluating at least one image, taken using a camera (30) that captures a surrounding area of the vehicle in front of the vehicle in the direction of travel, the visibility conditions in the surrounding area are estimated and the estimated visibility conditions are considered when determining the recommended maximum speed.

2. A method in accordance with claim 1,
**characterized in that** the road condition data comprises information indicating the quality of the road surface.

3. A method in accordance with claim 1 or 2,
**characterized in that** the road condition data comprises information indicating wetness of the road surface.

4. A method in accordance with at least one of the preceding claims,
**characterized in that** the road condition data are obtained by evaluating at least one image taken using a camera (30) that captures a surrounding area of the vehicle in front of the vehicle in the direction of travel.

5. A method in accordance with at least one of the preceding claims,
**characterized in that** the road condition data is received by an Internet based service, a radio service, a communication service between the vehicle and another vehicle and/or a communication service between the vehicle and an infrastructure.

6. A method in accordance with at least one of the preceding claims,
**characterized in that** the bend data is determined from a digital map available to the vehicle.

7. A method in accordance with at least one of the preceding claims,
**characterized in that** the bend data is determined by evaluating at least one image taken using a camera (30) that captures a surrounding area of the vehicle in front of the vehicle in the direction of travel.

8. A method in accordance with at least one of the preceding claims,
**characterized in that** the recommended maximum speed is determined by taking into account a road sign arranged along the road and/or taking into account the visibility conditions in a surrounding area in front of the vehicle in the direction of travel.

9. A method in accordance with at least one of the preceding claims,
**characterized in that** by evaluating at least one image, taken using a camera (30) that captures a surrounding area of the vehicle in front of the vehicle in the direction of travel, a road sign is detected and the detected road sign is taken into account when determining the recommended maximum speed.

10. A method in accordance with at least one of the preceding claims,
**characterized in that** using an automated actuation of a headlamp of the vehicle the visibility conditions in a surrounding area of the vehicle in front of the vehicle in the direction of travel are estimated and the estimated visibility conditions are considered when determining the recommended maximum speed.

11. A method in accordance with at least one of the preceding claims,
**characterized in that** a warning signal is output to the driver when the actual speed of the vehicle exceeds the recommended maximum speed when entering the bend.

12. A method in accordance with at least one of the preceding claims,
**characterized in that** the vehicle is automatically slowed down when the actual speed of the vehicle exceeds the recommended maximum speed when entering the bend.

13. A driver assistance system for assisting a driver of a vehicle during a drive along a roadway, having a module (20) or a plurality of modules for determining bend data, indicating a course of a bend in the road ahead of the vehicle in direction of travel, for determining road condition data, indicating a condition of the road surface in front of the vehicle in the direction of travel, and for estimating the visibility conditions in the surrounding area of the vehicle in front of the vehicle in the direction of travel by evaluating at least one image, taken using a camera (30) that captures a surrounding area of the vehicle in front of the vehicle in the direction of travel, using an evaluation unit (40), and a processor module (10) connected to the module (20) or the modules for determining a recommended maximum speed for enabling a safe passage of the bend using the determined bend data and road condition data and the estimated visibility conditions.

## Revendications

1. Procédé pour assister un conducteur d'un véhicule pendant un voyage le long d'une voie de circulation, procédé dans lequel on détermine des données de virage qui indiquent le tracé d'un virage de la voie de circulation s'étendant devant le véhicule, vue en direction de circulation, et des données d'état de voie de circulation, qui indiquent l'état de la surface de la voie de circulation située devant le véhicule, vue en direction de circulation, et au moyen des données de virage et des données d'état de voie de circulation on détermine une vitesse maximum recommandée qui permet une traversée en sécurité du virage,
**caractérisé en ce que** par l'évaluation d'au moins une image qui est prise à l'aide d'une caméra (30) qui saisit une zone environnante du véhicule située devant le véhicule, vue en direction de circulation, on estime les conditions de visibilité régnant dans la zone environnante et l'on tient compte des conditions de visibilité estimées lors de la détermination de la vitesse maximum recommandée.

2. Procédé selon la revendication 1,
**caractérisé en ce que** les données d'état de la voie de circulation incluent une information sur les propriétés de la surface de la voie de circulation.

3. Procédé selon la revendication 1 ou 2,
**caractérisé en ce que** les données d'état de la voie de circulation incluent une information concernant la présence d'eau sur la voie de circulation.

4. Procédé selon l'une au moins des revendications précédentes,
**caractérisé en ce que** les données d'état de la voie de circulation sont déterminées par l'évaluation d'au moins une image qui a été prise avec l'aide de la caméra (30), laquelle saisit une zone environnante du véhicule située devant le véhicule, vue en direction de circulation.

5. Procédé selon l'une au moins des revendications précédentes,
**caractérisé en ce que** les données d'état de la voie de circulation sont reçues au moyen d'un service basé sur l'Internet, d'un service radio, d'un service de communication entre le véhicule et un autre véhicule et/ou d'un service de communication entre le véhicule et une infrastructure.

6. Procédé selon l'une au moins des revendications précédentes,
**caractérisé en ce que** les données de virage sont déterminées à partir d'une carte géographique numérique mise à disposition du véhicule.

7. Procédé selon l'une au moins des revendications précédentes,
**caractérisé en ce que** les données de virage sont déterminées par l'évaluation d'au moins une image qui a été prise avec l'aide d'une caméra (30) qui saisit une zone environnante du véhicule située devant le véhicule, vue en direction de circulation.

8. Procédé selon l'une au moins des revendications précédentes,
**caractérisé en ce que** la vitesse maximum recommandée est déterminée en tenant compte d'un signe de circulation qui est agencé le long de la voie de circulation et/ou en tenant compte des conditions de visibilité qui règnent dans une zone environnante du véhicule située devant le véhicule, vue en direction de circulation.

9. Procédé selon l'une au moins des revendications précédentes,
**caractérisé en ce que** par l'évaluation d'au moins une image qui est prise avec l'aide d'une caméra (30), qui saisit une zone environnante du véhicule située devant le véhicule, vue en direction de circulation, on détecte un signe de circulation et pour la détermination de la vitesse maximum recommandée, on tient compte du signe de circulation détecté.

10. Procédé selon l'une au moins des revendications précédentes,
**caractérisé en ce que** au moyen d'un actionnement automatique d'un phare du véhicule, on estime les conditions de visibilité régnant dans une zone environnante du véhicule située devant le véhicule, vue en direction de circulation, et lors de la détermination de la vitesse maximum recommandée, on tient compte des conditions de visibilité estimées.

11. Procédé selon l'une au moins des revendications précédentes,
**caractérisé en ce que** un signal d'avertissement est délivré au conducteur si la vitesse réelle du véhicule est supérieure à la vitesse maximum recommandée lors de l'entrée dans le virage.

12. Procédé selon l'une au moins des revendications précédentes,
**caractérisé en ce que** le véhicule est automatiquement ralenti si la vitesse réelle du véhicule est supérieure à la vitesse maximum recommandée lors de l'entrée dans le virage.

13. Système d'assistance au conducteur pour assister un conducteur d'un véhicule pendant un voyage le long d'une voie de circulation, comprenant un module (20) ou plusieurs modules pour déterminer des données de virage, qui indiquent le tracé d'un virage de la voie de circulation s'étendant devant le véhicule, vue en direction de circulation, pour déterminer les données d'état de la voie de circulation, qui indiquent l'état de la surface de la voie de circulation située devant le véhicule, vue en direction de circulation, et pour estimer les conditions de visibilité régnant dans une zone environnante du véhicule situé devant le véhicule, vue en direction de circulation, par évaluation d'au moins une image prise par une caméra (30) au moyen d'une unité d'évaluation (40), et un module processeur (10) connecté au module (20) ou aux modules, pour déterminer une vitesse maximum recommandée permettant une traversée du virage en sécurité, au moyen des données de virage et des données d'état de la voie de circulation déterminées ainsi qu'au moyen des conditions de visibilité estimées.
